# EUROPÄISCHE PATENTSCHRIFT

(11) **EP 1 961 798 B1**
(45) Veröffentlichungstag und Bekanntmachung des Hinweises auf die Patenterteilung: **27.05.2009**
(21) Anmeldenummer: 07003810.4
(22) Anmeldetag: 23.02.2007
(51) Int. Cl.: C09K 3/10, F16L 5/00, F16L 5/02, H01R 13/52, H02G 3/22, B32B 27/00

(54) **Kombinationswerkstoff und Anwendungen für einen solchen Werkstoff**
Combination substance and applications for such a substance
Matériau combiné et utilisations d'un tel matériau

(43) Veröffentlichungstag der Anmeldung: 27.08.2008
(73) Patentinhaber: Hauff-Technik GmbH & Co. KG, 89542 Herbrechtingen (DE)
(72) Erfinder: Kurz, Ralf, 89537 Giengen (DE); Seibold, Dr. Michael, 81249 München (DE)
(74) Vertreter: Szynka, Dirk

(56) Entgegenhaltungen:
- EP-A- 1 001 495
- EP-A1- 1 643 604
- WO-A-96/09483
- JP-A- 11 199 857

## Beschreibung

Die Erfindung betrifft einen Kombinationswerkstoff und Anwendungen für einen solchen Werkstoff. Insbesondere betrifft die Erfindung einen Kombinationswerkstoffkörper, eine Vorrichtung zum Abdichten eines Kabel- oder Rohrauslasses eines Bauteilgehäuses und ein Bauteilgehäuse.

Um ein Kabel in ein Bauteil einzuführen und abzudichten, kommen bisher üblicherweise verschiedene Dichtungen aus elastomeren Werkstoffen zum Einsatz, welche entweder über kraftschlüssige Verbindung und damit mechanische Verpressung auf das Kabel abdichten oder aber über Dehnung von Gummimembranen auf die Kabel abdichten. Im ersten Fall müssen die Systeme in der Regel dem jeweiligen Kabeldurchmesser angepaßt werden. Dazu müssen Pressmittel gewechselt werden oder durch Abziehen von zuvor eingeschnittenen zwiebelschalenähnlichen überflüssigen Dichtlagen angepaßt werden. Im Falle des Aufdehnens der Gummimembranen wird die Dichtung zwar dem Durchmesser des Kabel automatisch angepaßt, dies hat aber negativen Einfluß auf die Druckdichtigkeit und die mechanische Festigkeit der Durchführung.

Zum Stand der Technik wird verwiesen auf die WO 96/09483, die Ringdichtungen und andere linienhafte Dichtungen mit Außenschichten aus Gelmaterialien offenbart.

Ferner wird verwiesen auf die EP 1 643 604 A1 mit Gelkörpern, die äußere Häute aufweisen und von durchzuführenden Leitungen durchstoßen werden sollen.

Die EP 1 001 495 A1 zeigt eine Dichtung zum Abdichten eines Kabelauslasses eines wasserdichten Steckergehäuses. Die Dichtung besteht aus einem Gummikörper, dem ein äußerer Gelkörper von außen aufgepresst ist. Das Gel kann beim Durchstecken von Metallteilen in Spuren mitgenommen werden und gleicht Schäden an der Gummidichtung aus.

Schließlich bezieht sich die JP 11 199 857 A auf Dichtungen mit wasserabsorbierenden Kunststoffen und unter Wasser aufquellendem Urethan, das außen liegt.

Vor diesem Hintergrund liegt der Erfindung die Aufgabe zu Grunde, eine verbesserte Dichtung zu schaffen, die sich besonders gut zum Abdichten eines Kabel- oder Rohrauslasses eines Bauteilgehäuses eignet. Diese Aufgabe wird durch den Gegenstand des Anspruchs 1 gelöst. Vorteilhafte Ausführungsformen sind in den Unteransprüchen und in der nachfolgenden Beschreibung wiedergegeben. Die Erfindung bezieht sich auch auf ein Herstellungsverfahren mit den Merkmalen des Anspruchs 9.

Die Erfindung basiert zum Teil auf der Erkenntnis, dass Gele in oder auf Kautschukmateriale gegossen werden können und nach der Vernetzung überraschenderweise sehr gute Haftung haben können.

Der Erfindung liegt daher ein Kombinationswerkstoff aus mindestens zwei Werkstoffen zugrunde, nämlich aus einem Kautschukmaterial und einem Gel. Das Eigenschaftsspektrum eines gelbasierten Werkstoffs kann durch Einbringen einer zweiten oder weiterer Phase aus Kautschukmaterial erheblich erweitert werden. Überraschenderweise bieten die besonders bevorzugt verwendeten PUR-Gele sehr starke Haftkräfte an gummielastomeren Werkstoffen. Der Kombinationswerkstoff bietet die Möglichkeit, 2D- oder 3D-Schichten, Fasern oder kugeldisperse Verbundwerkstoffkörper zu bilden. Das Gel weist dabei insbesondere bevorzugt eine niedrige Shorehärte auf.

Besonders die Materialkombination eines Kautschukmaterials mit dem Gel eröffnet neue, bisher mit einphasigen Elastomeren für Abdichtungszwecke so nicht zugängliche Werkstoffeigenschaften. So kann ein aus diesem Kombinationswerkstoff hergestellter Körper zwei Materialeigenschaften in einer Dichtung vereinen, beispielsweise sehr gute mechanische Eigenschaften und hohe Rückstellkräfte (hohe mittlere Shorehärte) mit ausgezeichnetem Fließvermögen, z.B. bei tiefen Temperaturen bis zu -30 Grad im Vergleich zum einphasigen herkömmlichen gummielastischen Dichtkörper.

Das Gel wirkt makroskopisch unter geringen Verformungskräften beinahe als Flüssigkeit und legt sich daher bereits unter kleinen Drücken in alle Risse, Riefen und Kratzer. Es erzielt dabei eine Abdichtung, welche durch herkömmliche gummielastische Dichtsysteme nur mit sehr hohen Kräften oder gar nicht zu erreichen sind.

Das Gel hat insbesondere bevorzugt die Eigenschaft, sich nach Kompression wieder vollständig oder nahezu vollständig wieder zurückzustellen. Diese Werkstoffeigenschaft führt z.B. dazu, dass die Dichtung nach dem Entfernen eines in sie eingeführten Langkörpers ihren Dichtbereich in vollem Umfang beibehält. Gummielastische Dichtkörper haben immer einen Druckverformungsrest, welcher die mehrmalige Verwendung der Dichtung, bzw. den Spannbereich meist erheblich einschränkt.

Der Kombinationswerkstoff besteht also aus mindestens zwei Werkstoffen, nämlich einem Kautschukmaterial und einem Gel, wobei das Gel mit dem Kautschukmaterial an einer Kontaktoberfläche eine innige Verbindung eingeht. Das Gel kontaktiert das Kautschukmaterial an der Kontaktoberfläche. Diese Kontaktoberfläche bildet einen Teil der Gesamtoberfläche des Kautschukmaterials und bildet insbesondere bevorzugt den kleineren Teil der Gesamtoberfläche des Kautschukmaterials. Bei dem Gel bildet der Teil, der mit der Kontaktoberfläche in Kontakt steht, ebenfalls einen Teil der Gesamtoberfläche aus. Das Gel weist also ferner Oberflächenbereiche auf, die nicht im Kontakt mit dem Kautschukmaterial stehen.

Die innige Verbindung zwischen dem Gel und dem Kautschukmaterial wird insbesondere bevorzugt durch chemische Bindungen gebildet. Die innige Verbindung ist insbesondere derart ausgebildet, dass im atomaren Maßstab Bindungen zwischen den Strukturbausteinen des Gels und des Kautschukmaterials gebildet werden. Es ist allerdings auch denkbar, dass die innige Verbindung durch Adhäsion gebildet wird. Die innige Verbindung ist aber derart ausgestaltet, dass sie nur unter Einwirkung von Kräften, welche um ein Vielfaches höher liegen, als die Kräfte die zum Aufdehnen des Kombinationswerkstoffs benötigt werden, getrennt werden kann.

Der Kombinationswerkstoff kann aber auch dadurch realisiert werden, dass das Gel teilweise formschlüssig in einer Ausnehmung des Kautschukmaterials abgestützt wird. Als Ausnehmung wird dabei insbesondere eine Nut, ein durch das Kautschukmaterial gebildeter Absatz oder beispielsweise ein Loch in dem Kautschukmaterial verstanden, beispielsweise in Form einer perforierten Oberfläche. Das Gel wird dann bereits als vollständig vernetzter oder zumindest fast vollständig vernetzter Gelkörper in die Ausnehmung des Kautschukmaterials eingelegt.

In einer bevorzugten Ausführungsform ist das Kautschukmaterial ein Elastomer oder ein Kunststoff mit solchen elastischen Verformungseigenschaften, dass er einer Ausdehnungsbewegung des in Richtung auf das Kautschukmaterial durch äußere Kräfte gedrückten Gels elastisch nachgibt. Insbesondere ist das Kautschukmaterial aus der Gruppe der Dienkautschuke, insb. der NR, IR, BR, SBR IIR, CR, NBR, gesättigter Kautschuke, insb. EPM, EPDM, HNBR, CO, ECO, ACM, SI, Q, FKM, der Silikone ausgewählt oder ein thermoplastischer Kunststoff. Der thermoplastische Kunststoff weist insbesondere solche Verformungseigenschaften auf, dass er der Ausdehnung des Gels Raum schaffen kann und dabei keine oder nur geringe Mengen von ausscheidbaren Bestandteilen, wie beispielsweise Weichmacher, Lösungsmittel oder unvernetzte oligomere, bzw. polymere Ausgangsstoffe enthält.

Ist das Kautschukmaterial als Elastomer oder als Kunststoff mit den vorbeschriebenen elastischen Verformungseigenschaften ausgebildet, so führt dies in vorteilhafter Weise dazu, dass das Kautschukmaterial einer Ausdehnung des Gels teilweise nachgibt. Ein Gel verhält sich wie eine newtonsche Flüssigkeit. Es kann in der Regel nicht leicht komprimiert werden, sondern weicht Krafteinflüssen von außen aus. Ist das Kautschukmaterial nun im gewissen Maße elastisch, so kann er dieser Ausweichbewegung des Gels Raum geben.

In einer bevorzugten Ausführungsform wird die innige Verbindung zwischen dem Gel und dem Kautschukmaterial dadurch erzeugt, dass die Komponenten, aus denen sich das Gel zusammensetzt, beispielsweise die Polyolkomponenten und Polyisocyanatkomponenten, im noch nicht völlig vernetzten Zustand in Kontakt mit der Kontaktoberfläche gebracht werden und dann an der Kontaktoberfläche teilweise weiter oder völlig miteinander vernetzen. Insbesondere können hochvernetzte Polyether-Polyole bzw. aliphatische oder aromatische Di-isocyanate vermischt und auf die Kautschukoberfläche gegossen werden. In dem 2-Komponentenprozess kann der Körper aus Kautschukmaterial die Funktion des Reaktionsgefäßes während der Polyadditionsreaktion übernehmen.

In einer bevorzugten Ausführungsform wird der Gelwerkstoff aus der Gruppe der Gele, die keine abspaltbaren Bestandteile, beispw. unvernetzte Oligomere oder Lösungsmittel, aufweisen ausgewählt. Unter einem "Gel" wird ein chemisch oder physikalisch verknüpftes Polymernetzwerk verstanden, welches in einem Medium in beliebigem Stoffzustand gequollen ist. Es besteht aus mindestens zwei Komponenten, die mehr oder weniger kontinuierlich im vorhandenen Volumen verteilt sind.

Aus dem Kombinationswerkstoff wird erfindungsgemäß ein Kombinationswerkstoffkörper gebildet. Besonders bevorzugt ist das Gel bei diesem Körper an seinen freien Oberflächen verhautet. Demgemäß wird das Gel wenigstens auf einer ihrer Grenzflächen mit einer Haut versehen. Die Haut verhindert insbesondere ein Mitschleppen von Gel, bzw. dient der Formgebung des Gels, wenn hieraus ein Gelkörper gebildet wird.

Vorzugsweise hat die Haut eine gewisse Elastizität oder Festigkeit oder Zähigkeit oder Reißfestigkeit. Das Material der Haut sollte das Bestreben haben, beispielsweise beim Durchstoßen mittels einer Leitung ihre ursprüngliche Form beizubehalten, somit die Leitung fortwährend eng zu umschließen, und damit zu verhindern, dass Gelteilchen von der Mantelfläche der Leitung mitgeschleppt werden.

Die gel-eigene Haut kann durch physikalische oder chemische Einwirkung gebildet werden, so dass man sie gar nicht als Fremdkörper identifizieren kann. Die bevorzugt für das Gel eingesetzten Werkstoffe können an der Oberfläche in der Zahl der freien Bindungen abgesättigt werden, so dass die Haftung an der Grenzfläche in gewünschter Weise maßgeschneidert werden kann. Bei einer besonders bevorzugten Ausführungsform wird das Gel so eingestellt, dass ölige Reste, wie sie typischerweise bei Silikongelen auftreten, fehlen, auch wenn Silikongele dem Grunde nach auch als Gele für den Kombinationswerkstoff eingesetzt werden können.

Insbesondere bevorzugt wirkt der Kombinationswerkstoffkörper nach außen als Elastomer, hat in seinem Aufbau im Innern aber mindestens eine Gelphase, beispielsweise in einem Innenraum. Beispielsweise ist der Körper rohrförmig ausgebildet, wobei das Kautschukmaterial rohrförmig ausgebildet ist und die Kontaktoberfläche mit dem Gel Teil der Innenoberfläche des rohrförmigen Kautschukmaterials ist. In einer anderen Ausführung kann der Körper platten- oder scheibenförmig sein, wobei das Kautschukmaterial platten- oder scheibenförmig ausgebildet ist und durchgehende Öffnung aufweist, wobei die Kontaktoberfläche mit dem Gel Teil der die Öffnung begrenzenden Oberfläche ist.

Insbesondere bevorzugt ist ein solcher Kombinationswerkstoffkörper, bei dem das Kautschukmaterial durch Materialwahl oder Formgebung, insbesondere durch Wahl der Wandstärke derart ausgebildet ist, dass der Körper aus Kautschukmaterial die Gestalt des Kombinationswerkstoffkörpers vorgibt und freistehend hält.

Erfindungsgemäß wird der Kombinationswerkstoff zum Verschließen von Durchlaßöffnungen verwendet, durch die ein Langkörper, beispielsweise ein Kabel, ein Rohr, ein Stab oder dergleichen geführt wird. Das die Außenoberfläche bildende Kautschukmaterial kann dann eine Abdichtung zu den die Durchlaßöffnung umgebenden, sie definierenden Oberflächen bilden, beispielsweise in dem er durch eine radial wirkende Kraft von Innen nach Außen gedrückt wird. Das innen, nämlich in einer das Kautschukmaterial durchgreifenden Öffnung angeordnete Gel umgreift in dichtender Weise den Langkörper. Das Gel kann so ausgeführt sein, dass es selbst wiederum eine Öffnung für den Langkörper aufweist, wobei die Öffnung vorzugsweise einen kleineren Durchmesser aufweist, als der Außendurchmesser des Langkörpers. Wird der Langkörper dann durch die Öffnung im Gel geschoben, drückt er das Gel nach außen. Da sich das Gel wie eine newtonsche Flüssigkeit verhält, wird es im Wesentlichen nicht komprimiert, sondern nach außen bewegt und drückt dabei das Kautschukmaterial nach außen. Diese nach außen gerichtete, auf das Kautschukmaterial wirkende Kraft kann dazu verwendet werden, das Kautschukmaterial gegen die Oberflächen der Durchlaßöffnung zu drücken und so durch Kraftschluß eine Dichtwirkung zu entfalten. Hierzu ist es von Vorteil, wenn die Vorrichtung nach außen als Elastomer wirkt. Das Kautschukmaterial kann zusätzlich die Funktion der mechanischen Abstützung des Langkörpers übernehmen. Gleichzeitig können die Rückstellkräfte des gedehnten Kautschukmaterials bewirken, dass das Gel an dem Langkörper gut anliegt.

Erfindungsgemäß wird eine Vorrichtung zum Abdichten eines Kabel- oder Rohrauslasses eines Bauteilgehäuses vorgeschlagen, die einen erfindungsgemäßen Kombinationswerkstoff aufweist. Die mit dem Kombinationswerkstoff erreichten Vorteile lassen sich nämlich insbesondere gut zum Abdichten eines solchen Kabel- oder Rohrauslasses einsetzen. Als Bauteilgehäuse werden dabei insbesondere Gehäuse aus dem Gebiet der Handhabung von Energie-, bzw. Datenströmen verstanden, wie beispielsweise Sicherungskästen, Computergehäuse, Schaltschränke, Verteilergehäuse. Als Bauteilgehäuse werden aber auch Gehäuse aus dem Gebiet der Handhabung von in Rohren geführten Fluiden verstanden, wie beispielsweise Pumpengehäuse, Pumpenschächte oder dergleichen. Schließlich werden als Bauteilgehäuse auch Gebäude, Häuser oder dergleichen verstanden.

In einer bevorzugten Ausführungsform weist die erfindungsgemäße Vorrichtung zum Abdichten einen durch das Kautschukmaterial gebildeten Grundkörper, der eine Öffnung zur Kabel-, bzw. Rohrdurchführung aufweist, und einen durch das Gel gebildeten Gelkörper, der die Öffnung zumindest teilweise verschließt und durch den Grundkörper abgestützt wird, auf. Der Gelkörper ist dabei an seinen freien Oberflächen vorzugsweise verhautet.

Der Gelkörper kann derart ausgebildet sein, dass er die Öffnung vollständig verschließt. Dann wird er beim Einführen des Rohrs oder des Kabels durchstochen. In einer bevorzugten Ausführungsform bildet der Gelkörper selbst eine Öffnung, durch die das Rohr oder das Kabel geführt werden kann. Dies erleichtert das Einführen des Kabels. Die Öffnung des Gelkörpers ist dabei vorzugsweise mit einem kleineren Durchmesser ausgebildet, als der Außendurchmesser des Kabels, bzw. des Kabelstrangs, bzw. des Rohrs oder Rohrstrangs. Durch die Rückstellkräfte des Gels wird dann eine gute Dichtwirkung bewirkt.

In einer bevorzugten Ausführungsform wird ein Randbereich des Gelkörpers in einer Ausnehmung des Grundkörpers abgestützt wird. So wird der Randbereich des Gelkörpers in einer festgelegten Position relativ zum Grundkörper gehalten. Dies ist insbesondere dann vorteilhaft, wenn der Gelkörper an der Kontaktoberfläche keine innige Verbindung mit dem Grundkörper eingeht, beispielsweise als bereits fertig vernetzter Gelkörper in den Grundkörper eingesetzt wird. Aber auch in den Ausführungsformen, bei denen der Gelkörper an der Kontaktoberfläche eine innige Verbindung mit dem Grundkörper eingeht, kann die Anordnung dieser Kontaktoberfläche in einer Ausnehmung die Festigkeit der Verbindung unterstützen. Die Ausnehmung ist insbesondere bevorzugt eine Nut, ein Absatz oder ein Loch in dem Grundkörper.

In einer bevorzugten Ausführungsform der erfindungsgemäßen Vorrichtung zum Abdichten geht der Gelkörper mit dem Grundkörper an einer Kontaktoberfläche eine innige Verbindung ein.

In einer bevorzugten Ausführungsform führt die Öffnung von der Vorderseite des Grundkörpers zu dessen Rückseite und wird durch Wände begrenzt, die an der Vorderseite und der Rückseite jeweils eine umlaufende Abschlußkante bilden, so dass ein Öffnungsraum gebildet wird, der sich von der Ebene, in der die Abschlußkante an der Vorderseite liegt, und der Ebene, in der die Abschlußkante an der Rückseite liegt, erstreckt, wobei der Gelkörper im wesentlichen in diesem Öffnungsraum angeordnet ist.

Gemäß einem weiteren Aspekt der Erfindung wird ein Bauteilgehäuse mit einem Kabel- oder Rohrauslass vorgeschlagen, das die erfindungsgemäße Vorrichtung zum Abdichten aufweist und bei dem der Grundkörper in dem Kabel- oder Rohrauslass angeordnet ist. Insbesondere bevorzugt ist der Grundkörper so ausgeführt, dass die Außenmaße des Grundkörpers im Wesentlichen den Maßen des Kabel- oder Rohrauslasses entsprechen.

In einer bevorzugten Ausführungsform des erfindungsgemäßen Bauteilgehäuses werden mehrere Kabel oder Rohre durch die Öffnung geführt.

Nachfolgend wird die Erfindung anhand einer lediglich Ausführungsbeispiele der Erfindung darstellenden Zeichnung näher erläutert. Darin zeigt:
- Fig. 1: eine geschnittene Ansicht eines Teils eines erfindungsgemäßen Kombinationswerkstoffkörpers, bei dem das Gel und das Kautschukmaterial an einer Kontaktoberfläche eine innige Verbindung eingehen;
- Fig. 2: eine geschnittene Ansicht eines Teils eines anderen erfindungsgemäßen Kombinationswerkstoffkörpers, bei dem das Gel das Gel teilweise formschlüssig in einer Ausnehmung des Kautschukmaterials abgestützt wird;
- Fig. 3: eine geschnittene Ansicht eines Teils des Grundkörpers und des in einer Öffnung des Grundkörpers vorgesehenen Gelkörpers der erfindungsgemäßen Vorrichtung zum Abdichten;
- Fig. 4: den Teil des Grundkörpers und des in einer Öffnung des Grundkörpers vorgesehenen Gelkörpers der erfindungsgemäßen Vorrichtung zum Abdichten nach Fig. 3 mit einem durch eine Öffnung des Gelkörpers durchgeführten Langkörper und
- Fig. 5: ein erfindungsgemäßes Bauteilgehäuse in einer perspektivischen Ansicht.

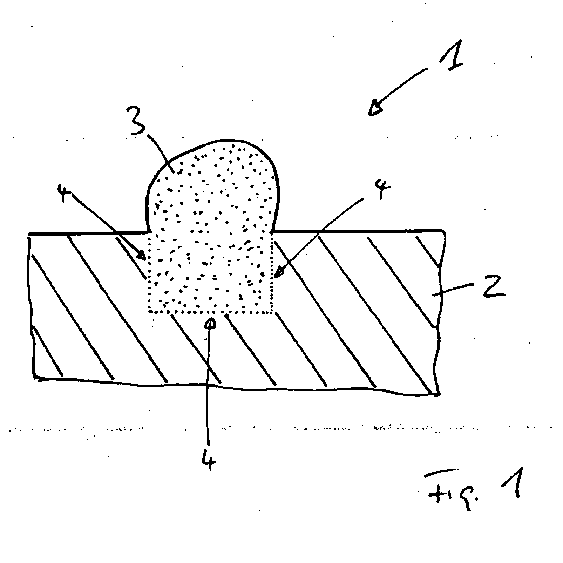

In Fig. 1 ist ein Teil eines erfindungsgemäßen Kombinationswerkstoffs 1 in einer geschnittenen Ansicht gezeigt. Dargestellt ist ein Teil des Kautschukmaterials 2 des Kombinationswerkstoffs 1 und das Gel 3. Zwischen dem Kautschukmaterial 2 und dem Gel 3 besteht an einer Kontaktoberfläche 4 eine innige Verbindung. Diese innige Verbindung wird durch die punktierten Linien dargestellt.

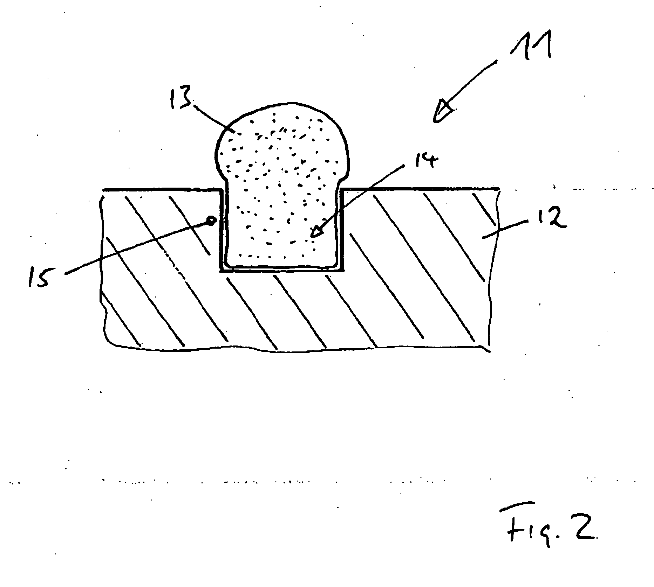

In der Fig. 2 ist ein Teil eines weiteren erfindungsgemäßen Kombinationswerkstoffs 11 in einer geschnittenen Ansicht gezeigt. Dargestellt ist ein Teil des Kautschukmaterials 12 des Kombinationswerkstoffs 11 und das Gel 13. Das Gel 13 ist zu einem Gelkörper verhautet. Es wird mit einem Randbereich 14 in einer Ausnehmung 15 des Kautschukmaterials 12 abgestützt.

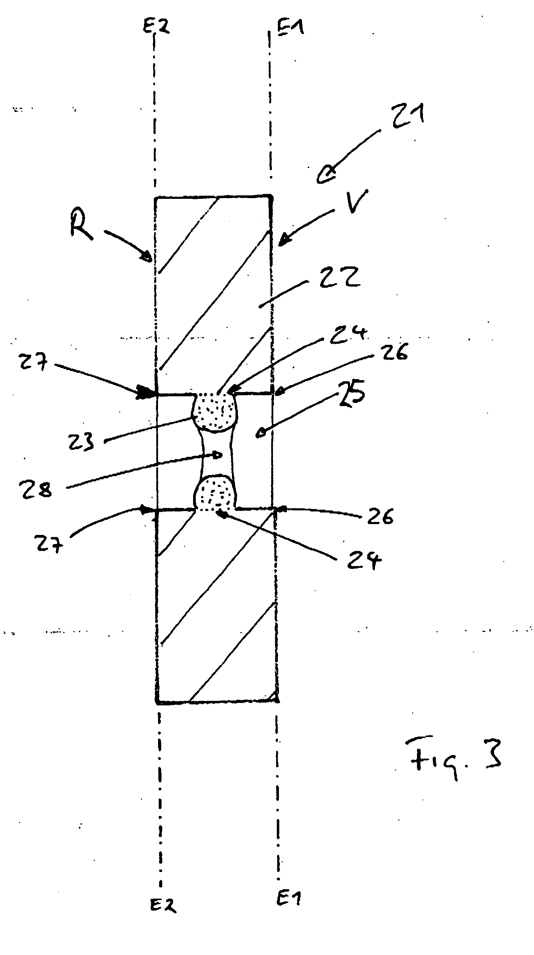

Fig. 3 zeigt eine Vorrichtung 21 zum Abdichten eines (nicht dargestellten) Kabel- oder Rohrauslasses eines (ebenfalls nicht dargestellten) Bauteilgehäuses. Dargestellt sind der Grundkörper 22 und der Gelkörper 23. An der Kontaktoberfläche 24 zwischen dem Grundkörper 22 und dem Gelkörper 23 besteht eine innige Verbindung. Der Grundkörper 22 weist eine Öffnung 25 auf. Die Öffnung 25 führt von der Vorderseite V des Grundkörpers 22 zu dessen Rückseite R und wird durch Wände begrenzt, die an der Vorderseite und der Rückseite jeweils eine umlaufende Abschlußkante 26, 27 bilden, so dass ein Öffnungsraum gebildet wird, der sich von der Ebene E1, in der die Abschlußkante 26 an der Vorderseite V liegt, und der Ebene E2, in der die Abschlußkante 27 an der Rückseite R liegt, erstreckt, wobei der Gelkörper 23 in diesem Öffnungsraum angeordnet ist.

In dem Gelkörper 23 ist eine Öffnung 28 zum Durchführen eines Langkörpers, beispielsweise eines Kabels oder eines Rohrs, vorgesehen.

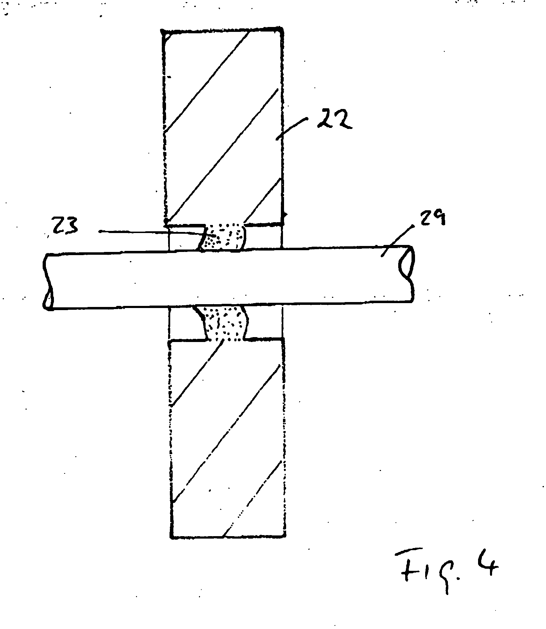

Fig. 4 zeigt die Vorrichtung nach Fig. 3 mit einem durch die Öffnung 28 durchgeschobenen Langkörper 29. Der Langkörper 29 weist einen Außendurchmesser auf, der größer ist als der Durchmesser der Öffnung 28. Durch den eingeführten Langkörper 29 wird das Gel des Gelkörpers 23 senkrecht zur Längsachse des Langkörpers, also in Richtung auf den Grundkörper 22 weggedrückt. Der elastomere Grundkörper 22 gibt dieser Bewegung des Gelkörpers 23 elastisch nach. Der Gelkörper 23 drückt den Grundkörper 22 somit nach außen, so dass dieser an seinem Außenumfang gegen die Wandung des (nicht dargestellten) Kabel- und Rohrauslasses gedrückt wird. Hierdurch wird durch Kraftschluß eine Dichtwirkung erzeugt. Gleichzeitig übt der elastomere Grundkörper 22 eine Rückstellkraft auf den Gelkörper 23, die zusammen mit der eigenen Rückstellkraft des Gelkörpers 23 zu einer dichtenden Anlage des Gelkörpers 23 an dem Außenumfang des Langkörpers 29 führt.

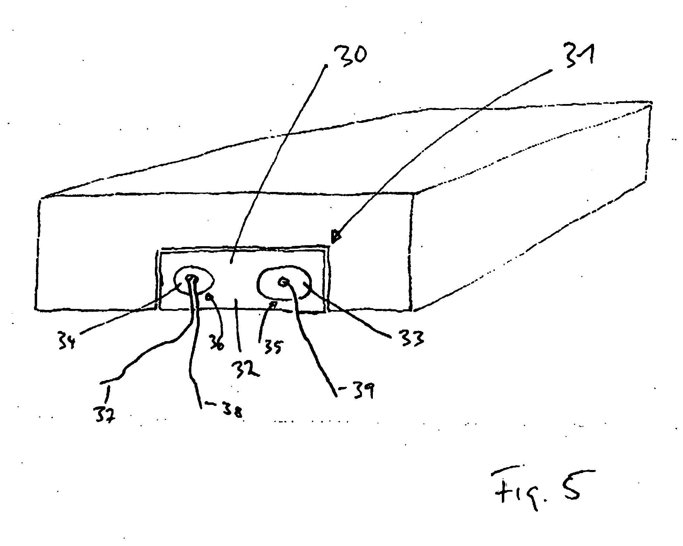

Fig. 5 zeigt eine Vorrichtung 30 zum Abdichten eines Kabel- oder Rohrauslasses 31. Die Vorrichtung 30 weist einen Grundkörper 32 mit zwei Gelkörper 33,34 auf. Der Gelkörper 33 ist in einer Öffnung 35 des Grundkörpers 32 und der Gelkörper 34 in einer Öffnung 36 des Grundkörpers 32 angeordnet. Durch Öffnung der Gelkörper 33,34 sind Kabel 37, 38, 39 geführt. Der Grundkörper 32 weist eine Außenkontur auf, die im Wesentlichen den Abmessungen des Kabel- oder Rohrauslasses 31 entspricht. Dadurch verschließt der Grundkörper 32 den Kabel- oder Rohrauslass 31.

## Patentansprüche

1. Vorrichtung zum Abdichten eines Kabel- oder Rohrauslasses eines Bauteilgehäuses mit einem Kombinationswerkstoff (1, 11, 21, 30) aus mindestens zwei Werkstoffen, nämlich einem Kautschukmaterial (2, 12, 22, 32) und
einem Gel (3, 13, 23, 33, 34),
wobei das Kautschukmaterial (2, 12, 22, 32) einen Grundkörper (22, 32) bildet, der eine Öffnung zur Kabel- oder Rohrdurchführung aufweist, und
das Gel (3, 13, 23, 33, 34) einen Gelkörper (23, 33, 34) bildet,
**dadurch gekennzeichnet, dass** der Gelkörper (23, 33, 34) innen, nämlich in der Öffnung des Grundkörpers (22, 32), angeordnet und zum dichtenden Umgreifen der Kabel- oder Rohrdurchführung ausgelegt ist und
das Kautschukmaterial (2, 12, 22, 32) und das Gel (3, 13, 23, 33, 34) eine derart innige Verbindung an einer Kontaktfläche aufweisen, dass sie nur unter Einwirkung von Kräften, welche um ein Vielfaches höher liegen als die Kräfte, die zum Aufdehnen des Kombinationswerkstoffs (1, 11, 21, 30) benötigt werden, getrennt werden können.

2. Vorrichtung nach Anspruch 1, bei der das Gel (3, 13, 23, 33, 34) aus der Gruppe der Gele, die keine oder nur geringe Mengen von abspaltbaren Komponenten oder flüchtigen Bestandteilen, beispielsweise unvernetzte Oligomere, Weichmacher oder Lösungsmittel, aufweisen, insb. PUR-Gele, ausgewählt ist.

3. Vorrichtung nach Anspruch 1 oder 2, bei der der Gelkörper (23, 33, 34) die Öffnung vollständig verschließt.

4. Vorrichtung nach einem der vorstehenden Ansprüche, bei der ein Randbereich (14) des Gelkörpers (23, 33, 34) in einer Ausnehmung des Grundkörpers (22, 32) abgestützt wird.

5. Vorrichtung nach einem der vorstehenden Ansprüche, bei der die Öffnung von der Vorderseite des Grundkörpers (22, 32) zu dessen Rückseite führt und durch Wände begrenzt wird, die an der Vorderseite und der Rückseite jeweils eine umlaufende Abschlusskante bilden, so daß ein Offnungsraum gebildet wird, der sich von der Ebene, in der die Abschlusskante an der Vorderseite liegt, bis zu der Ebene, in der die Abschlusskante an der Rückseite liegt, erstreckt, wobei der Gelkörper (23, 33, 34) im wesentlichen in diesem Offnungsraum angeordnet ist.

6. Bauteilgehäuse mit einem Kabel- oder Rohrauslass mit einer Vorrichtung nach einem der vorstehenden Ansprüche, wobei der Grundkörper (22, 32) in dem Kabel- oder Rohrauslass (31) angeordnet ist.

7. Bauteilgehäuse nach Anspruch 6, wobei die Außenmaße des Grundkörpers (22, 32) im Wesentlichen den Maßen des Kabel- oder Rohrauslass (31) entsprechen.

8. Bauteilgehäuse nach Anspruch 6 oder 7, wobei mehrere Kabel (37, 38, 39) oder Rohre durch die Öffnung geführt werden.

9. Verfahren zur Herstellung einer Vorrichtung nach einem der Ansprüche 1 - 5 oder eines Bauteilgehäuses nach einem der Ansprüche 6 - 8, bei dem die innige Verbindung zwischen dem Gel (3, 13, 23, 33, 34) und dem Kautschukmaterial (2, 12, 22, 32) **dadurch** erzeugt wird, daß das Gel (3, 13, 23, 33, 34) im noch nicht völlig vernetzten Zustand in Kontakt mit der Kontaktoberfläche (4, 14, 24) gebracht wird und dann an der Kontaktoberfläche (4, 14, 24) teilweise weiter oder völlig vernetzt.

10. Verfahren nach Anspruch 9, bei dem das Gel (3, 13, 23, 33, 34) auf das Kautschukmaterial (2, 12, 22, 32) gegossen wird.

## Claims

1. A device for sealing a cable or tube outlet of a component housing with a combination material (1, 11, 21, 30) of at least two materials,
namely a rubber material (2, 12, 22, 32) and
a gel (3, 13, 23, 33, 34),
wherein said rubber material (2, 12, 22, 32) constitutes a base body (22, 32) comprising an opening for a cable or tube duct, and
said gel (3, 13, 23, 33, 34) constitutes a gel body (23, 33, 34),
**characterized in that** said gel body (23, 33, 34) is placed on the inside, namely in said opening of said base body (22, 32), and is designed for enclosing said cable or tube duct tightly and
said rubber material (2, 12, 22, 32) and said gel (3, 13, 23, 33, 34) have such an intense connection at a contact area that they could only be separated under the influence of forces being a multiple of the forces for dilating said combination material (1, 11, 21, 30).

2. A device according to claim 1, wherein said gel (3, 13, 23, 33, 34) is selected out of the group of gels comprising none or only small amounts of separable components or volatile constituents, for example non cross-linked oligomers, softening agents or solvents, especially out of PUR-gels.

3. A device according to claim 1 or 2, wherein said gel body (23, 33, 34) closes said opening entirely.

4. A device according to one of the preceding claims, wherein a fringe area (14) of said gel body (23, 33, 34) is supported in a recess of said base body (22, 32).

5. A device according to one of the preceding claims, wherein said opening extends from the front side of said base body (22, 32) to its rear side and is defined by walls that form a circumferential terminal edge each at said front side and said rear side, so that an opening space is formed extending from the plane in which said terminal edge lies at said front side, to the plane in which said terminal edge lies at said rear side,
wherein said gel body (23, 33, 34) is mainly located in said opening space.

6. A component housing having a cable or tube outlet including a device according to one of the preceding claims, wherein said base body (22, 23) is located inside said cable or tube outlet (31).

7. A component housing according to claim 6, wherein the external dimensions of said base body (22, 32) substantially match said cable or tube outlet's dimensions.

8. A component housing according to claim 6 or 7, wherein several cables (37, 38, 39) or tubes are passed through said opening.

9. A method for manufacturing a device according to one of claims 1 - 5 or a component housing according to one of claims 6 - 8, wherein said intense connection between said gel (3, 13, 23, 33, 34) and said rubber material (2, 12, 22, 32) is generated by bringing said gel (3, 13, 23, 33, 34) in contact with said contact area (4, 14, 24) in a not yet completely cross-linked state and is then partly further or totally cross-linked on said contact area (4, 14, 24).

10. A method according to claim 9, wherein said gel (3, 13, 23, 33, 34) is poured onto said rubber material (2, 12, 22, 32).

## Revendications

1. Dispositif d'étanchéification d'une sortie de câble ou de tube pratiquée dans un logement pour composant mettant en oeuvre d'un matériau combiné (1, 11, 21, 30) composé d'au moins deux matières,
à savoir un matériau de caoutchouc (2, 12, 22, 32) et
un gel (3, 13, 23, 33, 34),
le matériau de caoutchouc (2, 12, 22, 32) formant un corps principal (22, 32) présentant une ouverture destinée au passage du câble ou du tube, et
le gel (3, 13, 23, 33, 34) formant un corps gélifié (23, 33, 34),
**caractérisé en ce que** le corps gélifié (23, 33, 34) est arrangé intérieurement, à savoir dans l'ouverture du corps principal (22, 32), et est configuré pour entourer de façon étanche le pansage de câble ou de tube et
le matériau de caoutchouc (2, 12, 22, 32) et le gel (3, 13, 23, 33, 34) présentent une liaison si intense a une surface de contact qu'ils ne peuvent être séparés que sous l'action de forces considérablement plus élevées que les forces nécessaires à la dilatation du matériau combiné (1, 11, 21, 30).

2. Dispositif selon la revendication 1, dans lequel le gel (3, 13, 23, 33, 34) est choisi dans le groupe constitué par les gels ne présentant pas, ou uniquement en faibles quantités, de composants séparables ou de constituants volatils, par exemple des oligomères non réticulés, des plastifiants ou des solvants, en étant choisi notamment parmi les gels PUR.

3. Dispositif selon la revendication 1 ou 2, dans lequel le corps gélifié (23, 33, 34) bouche entièrement l'ouverture.

4. Dispositif selon l'une des revendications précédentes, dans lequel une partie périphérique (14) du corps gélifié (23, 33, 34) repose dans un évidement du corps principal (22, 32).

5. Dispositif selon l'une des revendications précédentes, dans lequel l'ouverture conduit de la face avant du corps principal (22, 32) à sa face arrière et est délimitée par des parois formant une arête terminale circulaire sur la face avant ainsi que sur la face arrière de manière à former un espace d'ouverture qui s'étend depuis le niveau auquel l'arête terminale se trouve sur la face avant, jusqu'au niveau auquel l'arête terminale se trouve sur la face arrière, le corps gélifié (23, 33, 34) étant arrangé sensiblement dans cet espace d'ouverture.

6. Logement pour composant présentant une sortie de câble ou de tube pourvue d'un dispositif selon l'une des revendications précédentes, dans lequel le corps principal (22, 32) est arrangé dans la sortie de câble ou de tube (31).

7. Logement pour composant selon la revendication 6, dans lequel les dimensions extérieures du corps principal (22, 32) correspondent essentiellement aux dimensions de la sortie de câble ou de tube (31).

8. Logement pour composant selon la revendication 6 ou 7, dans lequel plusieurs câbles (37, 38, 39) ou tubes sont introduits par l'ouverture.

9. Procédé de fabrication d'un dispositif selon l'une des revendications 1 à 5 ou d'un logement pour composant selon l'une des revendications 6 à 8, dans lequel la liaison étroite entre le gel (3, 13, 23, 33, 34) et le matériau de caoutchouc (2, 12, 22, 32) est formé par le fait que le gel (3, 13, 23, 33, 34) est mis en contact avec la surface de contact (4, 14, 24) alors qu'il n'est pas encore totalement réticulé, puis qu'il subit une réticulation plus poussée voire totale sur la surface de contact (4, 14, 24).

10. Procédé selon la revendication 9, dans lequel le gel (3, 13, 23, 33, 34) est coulé sur le matériau de caoutchouc (2, 12, 22, 32).
